# EUROPÄISCHE PATENTSCHRIFT

(11) **EP 1 079 228 B1**
(45) Veröffentlichungstag und Bekanntmachung des Hinweises auf die Patenterteilung: **28.01.2004**
(21) Anmeldenummer: 00115825.2
(22) Anmeldetag: 22.07.2000
(51) Int. Cl.: G01N 21/90

(54) **Vorrichtung und Verfahren zur optischen Inspektion offener Getränkebehälter**
Apparatus and method for optically inspecting open beverage containers
Méthode et dispositif pour l'inspection optique de récipients à boisson ouverts

(30) Priorität: 25.08.1999 DE 19940363
(43) Veröffentlichungstag der Anmeldung: 28.02.2001
(73) Patentinhaber: KRONES AG, 93068 Neutraubling (DE)
(72) Erfinder: Kwirandt, Rainer, Dr., 93083 Obertraubling (DE)

(56) Entgegenhaltungen:
- EP-A- 0 371 546
- WO-A-98/19150
- US-A- 5 822 056
- US-A- 5 912 776

## Beschreibung

Die Erfindung betrifft eine Vorrichtung der im Oberbegriff des Anspruchs 1 angegebenen Art sowie ein Verfahren gemäß Oberbegriff des Anspruchs 10.

Die optische Inspektion offener Getränkedosen wird beispielsweise in der Abfüllindustrie vorgenommen, um beschädigte, fehlerhafte oder verschmutzte Dosen auszusondern.

Bei der aus WO96/31768 bekannten Vorrichtung dieser Art wird der Kragen an der Innenseite der Dose von außen oben schräg beleuchtet und in einer mit ihrer optischen Achse auf die Dosenachse ausgerichteten Kamera über einen Reflektor so abgebildet, daß der Kragenbiegungsverlauf gestreckt erscheint. Gleichzeitig wird der Dosenrandflansch getrennt abgebildet. In einer weiteren Station der Vorrichtung wird der beleuchtete Dosenboden abgebildet und zusammen mit einer Abbildung des unteren inneren Wandbereichs der Dose untersucht. Die Lichtquelle ist eine Kegelstumpfanordnung von LEDs oberhalb und außerhalb des Reflektors.

Für die Boden- und die Flanschabbildungen werden Strahlteilerspiegel und seitlich angeordnete Kameras eingesetzt. Zum Reflektor wird nur ein kleiner Teil des eingebrachten Lichtes reflektiert. Die nach unten auswärts weisende Innenfläche des Kragens läßt sich nicht aussagefähig abbilden. Denn ein Großteil des von außen oben schräg nach innen auf die Innenwand des Kragens gerichtete Licht wird nach unten reflektiert und durch Vielfachreflektion aufgezehrt.

Bei der aus WO91/06846 bekannten Vorrichtung wird die einen nach innen gewölbten Dosenboden aufweisende Dose von außen her mittels einer Lichtquelle mit domförmiger, dreidimensionaler LED-Anordnung beleuchtet. Innerhalb der Lichtquelle ist eine Fischaugenlinse angeordnet. Die verschiedenen Abschnitte im Inneren der Dose werden unterschiedlich intensiv beleuchtet, wobei wegen Mehrfachreflexion die Beleuchtungsintensität am Dosenboden geringer ist als an der Innenwand des Dosenkragens. Schräg nach unten gerichtete Lichtstrahlen werden mehrfach bis auf den Dosenboden reflektiert. Vertikal gerichtete Lichtstrahlen treffen direkt auf den Dosenboden. Den Dosenboden treffendes Direkt- und Reflexionslicht wird axial und nach außen reflektiert, wobei vom Innenboden schräg nach oben außen reflektiertes Licht über Mehrfachreflexionen und über die Krageninnenwand zur Linse gebracht wird. Dadurch wird ein beträchtlicher Teil des eingesetzten Lichts verloren. Die Abbildung des Krageninnenwandbereiches ist nicht ausreichend aussagefähig. Das Licht vagabundiert im Inneren der Dose, wird stark absorbiert und beleuchtet Fehler so diffus, daß sie in der Abbildung kaum wahrzunehmen sind.

Bei der aus WO98/19150 bekannten Vorrichtung zur Flascheninspektion werden lichtundurchlässige Flaschen nur von außen beleuchtet, um die Mündungsdichtfläche und den Außengewindebereich bei der Mündungsfläche zu inspizieren. Das Reflexionslicht wird von einem pyramiden- oder schalenförmigen runden optischen Kegelreflektor auf das Objektiv der Kamera geworfen. Der Kegelreflektor arbeitet nach dem optischen Prinzip der Totalreflexion, so daß er vorteilhafterweise keine beschädigungsempfindlichen lichtundurchlässigen Spiegelflächen benötigt.

Aus US 5 822 056 ist eine Inspektionsvorrichtung für Dosen bekannt, die zur Vermessung der von oben sichtbaren, nach außen gerichteten Flanschfläche einer offenen Dose dient. Ziel ist, den Durchmesser und die Breite der Flanschfläche zu ermitteln. Dies wird mit Hilfe einer speziell ausgebildeten Beleuchtungseinrichtung erreicht, die nur den äußeren und inneren Rand dieser nach außen geneigten Flanschfläche sichtbar macht. Die Innenseite der zum Doseninnenraum geneigten Fläche des radial einwärts geformten Kragens einer Dose wird dagegen nicht beleuchtet und kann demzufolge auch nicht inspiziert werden.

EP 0 371 546 A1 offenbart eine Inspektionsvorrichtung für Flaschen, bei der der Kopfbereich transparenter Flaschen im wesentlichen radial von außen beleuchtet und die Innenfläche des Flaschenkopfbereiches von einer Kamera durch die offene Flaschenmündung betrachtet wird. Diese Inspektionseinrichtung ist nicht zur Kontrolle undurchsichtiger Dosen geeignet.

US 5 912 776 zeigt eine Vorrichtung zur Inspektion offener Dosen. Zur Beleuchtung der Dosen ist eine um ein Kameraobjektiv ringförmig ausgebildete Lichtquelle vorgesehen. Nachteiligerweise ist damit nur eine sehr diffuse Beleuchtung der zum Doseninnenraum geneigten Innenfläche des eingezogenen Kragens realisierbar, was insbesondere die Erkennung von nicht lichtabsorbierenden Fehlern, wie Falten oder dgl. erschwert.

Der Erfindung liegt die Aufgabe zugrunde, eine Vorrichtung der eingangs genannten Art sowie ein Verfahren anzugeben, mit denen eine aussagefähige Abbildung des hinsichtlich Beschädigungen und/oder Verschmutzungen kritischen Innenwandbereichs des Kragens möglich ist.

Die gestellte Aufgabe wird mit den Merkmalen des Anspruchs 1 und den Merkmalen des Verfahrensanspruchs 10 gelöst.

In der Vorrichtung wird mit der optischen Einrichtung die Lichtquelle durch die Dosenöffnung virtuell auf den Dosenboden verlagert, ohne Licht auf dem Weg zum Dosenboden nennenswert zum Beleuchten der Doseninnenwand zu vergeuden. Mit der virtuell auf den Dosenboden verlagerten Lichtquelle wird dank der reflektierenden Eigenschaften des Dosenbodens die Innenwand des Kragens von unten her intensiv und gleichmäßig beleuchtet, um aus dem von der Innenwand des Kragens kommenden Reflexionslicht eine aussagefähige Abbildung zu schaffen. Auf diese Weise ist ein erheblicher Teil des eingesetzten Lichts nutzbar. Am Kragen vorliegende Fehler, Verschmutzungen oder Rückstände sind einfach und schnell festzustellen, was im besonderen für eine Dosenfüllanlage mit hoher Taktrate wesentlich ist, um jede beschädigte und/oder verschmutzte Dose aussondern zu können, ehe diese eine Betriebsstörung hervorzurufen vermag, oder sie zumindest markieren zu können.

Verfahrensgemäß wird so vorgegangen, daß zunächst dem eigentlich abzubildenden Abschnitt der Dose, nämlich der Innenwand des Kragens, bei der Beleuchtung kein nennenswertes Augenmerk geschenkt wird, sondern im wesentlichen das eingesetzte, von außen eingestrahlte Licht gebündelt von der Seite und durch die Engstelle des Reflektors und dann durch die Dosenöffnung nur auf den Dosenboden gerichtet wird. Um auf dem Dosenboden einen gleichmäßig erhellten und geometrisch exakt definierten Lichtfleck erzeugen zu können, mittels dessen sich die Innenwand des radial einwärts geneigten Kragens effektiv von unten her beleuchten läßt, wird dabei das zunächst gebündelte Licht entsprechend aufgeweitet. Das von unten kommende, an der Innenwand des Kragens reflektierte Licht wird zur Kamera gebracht, die eine aussagefähige Abbildung des kritischen Innenwandbereiches des Kragens dank einer Beleuchtungsqualität herstellt, wie sie auch bei einer Position der Lichtquelle am Dosenboden vorläge.

Zweckmäßigerweise wird ein mittiger kreisförmiger oder kreisringförmiger Lichtfleck auf dem Dosenboden erzeugt, der die Lichtquelle repräsentiert und nicht größer sein sollte als der Außendurchmesser des Dosenbodens.

Um im Hinblick auf eine hohe Reflexions-Lichtausbeute einen möglichst großen Querschnitt des Reflektors nutzen zu können, wird nur eine kleine Öffnung im Reflektor zum Bestrahlen des Dosenbodens mit gebündeltem Licht benutzt, das jedoch nach der Engstelle optisch aufgeweitet wird, um einen gleichmäßig erhellten Lichtfleck auf dem einwärts gewölbten Dosenboden zu bilden und dessen reflektierende Eigenschaften zu nutzen.

Um auch durch eine kleine Engstelle ausreichende Lichtintensität zu bringen, sollten zwischen der Lichtquelle und der Engstelle strahlformende Mittel zur Bündelung und/oder Anpassung des Strahlumrisses an die Umrißform des Dosenbodens vorgesehen sein.

Würde Licht herkömmlicher Lichtquellen so gebündelt, daß es bequem durch ein 5 bis 10 mm großes Loch durchtreten kann, wäre die erzielbare Lichtintensität zu schwach. Wäre hingegen die Lichtintensität der herkömmlichen Lichtquelle stark genug, würde das Licht stark divergieren und auf die optischen Bauteile des Reflektors auftreffen, was Reflexionen und starke Überbelichtungen/Geisterbilder erzeugte. Deshalb ist die Lichtquelle zweckmäßigerweise ein Laser, insbesondere ein Halbleiter-Laser, der einen gebündelten Lichtstrahl abgibt, der verlustarm die Engstelle oder Engstellen des Reflektors passiert.

Bei der Laserlichtquelle sollte eine Kollimatorlinse vorgesehen sein, um den Laserlichtstrahl zu bündeln bzw. zu fokussieren. Anschließend ist eine Zylinderlinse zweckmäßig, um die astigmatische Strahlkontur in eine runde Form zu ändern, die im Lichtfleck auf dem Dosenboden gebraucht wird. Bei der Fokussierung befindet sich der Brennpunkt je nach Einstellung innerhalb des Bereiches zwischen der Zylinderlinse und dem Innenraum des Reflektors. Die Engstelle kann dabei eine kreisrunde Öffnung mit einem Durchmesser von, z.B. 5 bis 10 mm sein.

Da moderne Laserlichtquellen sehr klein bauen, wäre eine Positionierung einer Laserlichtquelle mittig oberhalb oder in der Engstelle denkbar sein.

Zweckmäßigerweise wird die Laserlichtquelle jedoch seitlich außerhalb des zur Kamera gerichteten Reflexionslicht-Strahlengangs des Reflektors positioniert und der gebündelte und fokussierte Laserlichtstrahl über einen Umlenkspiegel durch die Engstelle gespiegelt.

Hierbei kann es grundsätzlich zweckmäßig sein, die mittig positionierte Laserlichtquelle oder den Umlenkspiegel als Abschattungselement zu nutzen oder auszubilden, um eine die Auswertung der Abbildung störende Blendung in der Abbildungsmitte zu vermeiden.

Um den gebündelten und fokussierten Strahl entsprechend aufzuweiten, sollte hinter der Engstelle, vorzugsweise innerhalb des Reflektors, eine Zerstreuungslinse vorgesehen sein.

Wird ein Umlenkspiegel vorgesehen, so läßt sich dieser baulich einfach mit einer Halterung oberhalb einer die Engstelle definierenden Öffnung des Reflektors am Reflektor festlegen und gegebenenfalls einjustieren.

Der Reflektor, der zweckmäßigerweise ein Kegelreflektor ist, wird zweckmäßig durch ein Schutzglas gegen Verschmutzungen abgedeckt. Die Zerstreuungslinse läßt sich einfach an dem Schutzglas anbringen. Die Linse und der Umlenkspiegel können aber auch an einem hohlen Röhrchen befestigt sein (Spiegel am oberen Ende, Linse am unteren Ende), das in der Öffnung des Reflektors befestigt ist und seitlich neben dem Umlenkspiegel eine Eintrittsöffnung für den Laserstrahl besitzt.

Verfahrensgemäß wird der gebündelte und geformte Laserlichtstrahl erst hinter der Engstelle optisch so weit aufgeweitet, daß ein gleichmäßig erhellter Lichtfleck . bestimmter Größe und Form zentrisch auf dem Dosenboden entsteht. Indem die Aufweitung erst hinter der Engstelle erfolgt, lassen sich im Strahlengang zur Engstelle Reflexionen und starke Überbelichtungen/Geisterbilder vermeiden.

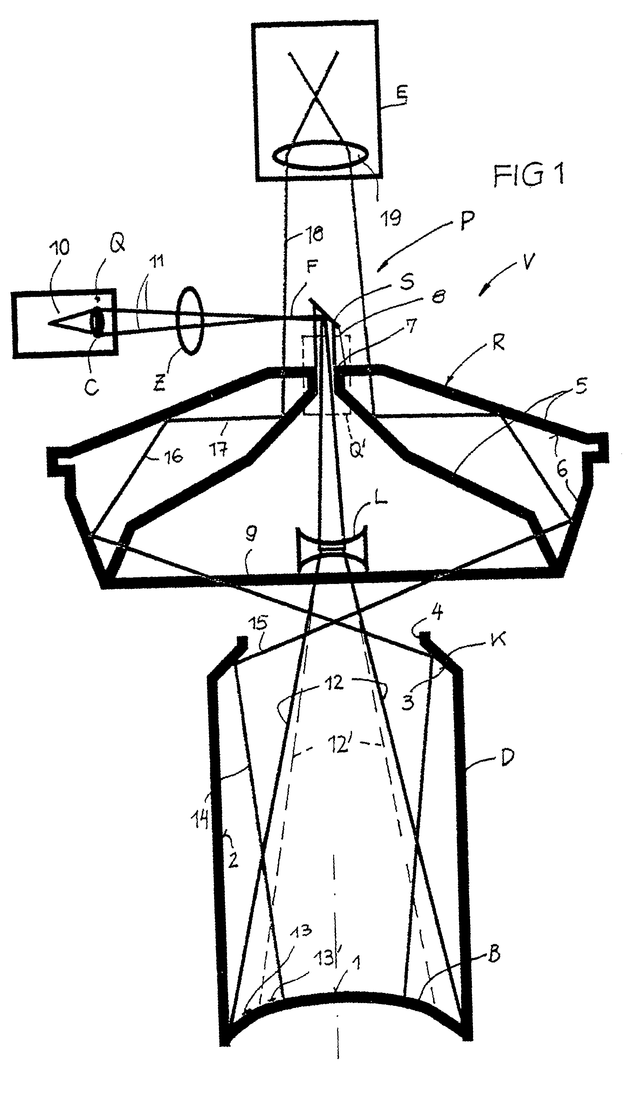

Anhand der Fig. 1 der Zeichnungen ist eine Ausführungsform des Erfindungsgegenstandes erläutert, wobei gestrichelt eine Detailvariante angedeutet ist.

Eine Vorrichtung V zur sequentiellen optischen Inspektion offener Getränkedosen D, z.B. in einer Füllanlage (nicht gezeigt), weist wenigstens eine elektronische Kamera E auf, deren optische Achse bei der gezeigten Ausführungsform in Fig. 1 im Moment der Bildaufnahme mit der Mittelachse der Dose D übereinstimmt, und die oberhalb der zu inspizierenden Dose D positioniert ist. Zwischen der Kamera E und der Dose D ist ein Reflektor R vorgesehen. Zwischen der Kamera E und dem Reflektor R ist außerhalb des Reflexionslicht-Strahlengangs vom Reflektor R zur Kamera E seitlich eine Lichtquelle Q positioniert und auf einen am Reflektor R oben angeordneten Umlenkspiegel S einer allgemein mit P angedeuteten optischen Einrichtung ausgerichtet. Die Lichtquelle Q ist beispielsweise eine Laserlichtquelle 10, z.B. ein Halbleiterlaser, der zur Bündelung des Lichts 11 eine Kollimatorlinse C besitzt, hinter der eine Zylinderlinse Z vorgesehen ist, die den astigmatischen Umriß des Lichts 11 in eine runde Form bringt. Die Linsen C, Z bilden erste, strahlformende Mittel für das Licht 11, das zum Beleuchten des Inneren der Dose D dient.

Im Reflektor R, der zweckmäßigerweise ein Kegelreflektor mit totalreflektierenden Oberflächen 6 in einem Gehäuse 5 oder ein transparenter Glas- oder Kunststoffkörper ist, ist als weiteres, strahlformendes Mittel L eine Zerstreuungslinse vorgesehen, die zweckmäßigerweise auf einem Schutzglas 9 des Reflektors R angeordnet ist.

Die Dose D besitzt einen reflektierenden Dosenboden B, der wie bei Getränkedosen üblich, zwecks höherer Druckfestigkeit nach innen gewölbt ist, und einen oberseitigen, schräg nach innen eingezogenen Kragen K, der zu einer oberen Öffnung 4 führt, in die nach dem Befüllen ein Deckel eingesetzt und durch umbördeln befestigt wird.

Die mit 1 bezeichnete Oberfläche des Dosenbodens B ist - wie gesagt - reflektierend, wie gegebenenfalls auch die mit 2 bezeichnete Innenwand des Dosenkörpers und die geneigte Innenwand 3 des Kragens K bzw. Schulterfläche. Im Zentrum des Reflektors R ist eine Engstelle 7 vorgesehen, z.B. eine 5 bis 10 mm große Öffnung, durch welche das von der Lichtquelle Q stammende Licht 11 über den Umlenkspiegel S nach unten eingespiegelt wird. Durch die strahlformenden Mittel C, Z wird das Licht 11 fokussiert, wobei der Brennpunkt F beispielsweise kurz vor dem Umlenkspiegel S liegt, oder zumindest innerhalb des Bereiches zwischen der Zylinderhülse Z und der Zerstreuungslinse L.

Mittels der Zerstreuungslinse L wird das eingespiegelte Licht 11 aufgeweitet, um einen Lichtkegel 12 zu bilden, der von oben direkt auf den Dosenboden B gerichtet ist und dort einen gleichmäßig hellen, zentrischen Lichtfleck 13 formt. Dadurch wird sozusagen die Lichtquelle Q mittels der optischen Einrichtung P auf den Dosenboden B verlagert. Der Lichtfleck 13 sollte kreisrund und möglichst nicht größer als der Dosenboden B sein. Gegebenenfalls ist er sogar kleiner als dieser (gestrichelt angedeutet bei 13'). Vom Dosenboden B bzw. der in den Lichtfleck 13 bzw. 13' verlagerten Lichtquelle Q wird Licht 14 nach oben und schräg nach außen gegen die Innenwand 3 des Kragens K reflektiert, und von dort (bei 15 angedeutet) schräg nach außen in den Reflektor R. Das Reflexionslicht wird an den total reflektierenden Oberflächen 6, wie bei 16 und 17 angedeutet, umgelenkt und dann schließlich in einem gebündelten Reflexionslichtstrahl 18 auf ein Objektiv 19 der Kamera E gebracht.

Der Umlenkspiegel S kann mit einem Halter 8 an der Oberseite des Reflektors R angebracht sein. Die Zerstreuungslinse L ist zweckmäßigerweise auf dem Schutzglas 9 festgeklebt. Für das Licht 11 aus der Lichtquelle Q kann als Schutz eine Abdeckung vorgesehen werden, die gegebenenfalls auch die strahlformenden Mittel C, Z lagert.

Gestrichelt ist die Lichtquelle Q' angedeutet, die entweder unmittelbar oberhalb der Engstelle 7 oder in der Engstelle 7 positioniert sein kann. Zweckmäßigerweise bilden der Umlenkspiegel S oder die zentrisch positionierte Lichtquelle Q' ein Abschattungselement für das gegebenenfalls blendende Zentrum des Lichtflecks 13 bzw. 13'.

Die Engstelle kann eine Öffnung mit einem Durchmesser zwischen 5 und 10 mm sein. Diese Größe reicht aus, mittels der Laserlichtquelle Q im Lichtfleck 13, 13' ausreichende Lichtintensität und eine gleichmäßige Beleuchtungsdichte zu erzielen.

Da die Innenwand 3 des Kragens K und der Öffnungsrand 4 von unten her intensiv und mit geringen Verlusten beleuchtet werden, läßt sich eine sehr aussagefähige Abbildung dieser Bereiche in der Kamera E erzielen, die (z.B. zu einem Vergleich mit einer Referenzabbildung) herstellungsbedingte Schäden des Kragens oder des Öffnungsrandes bzw Verschmutzungen oder Rückstände klar darstellt. Die Qualität der Abbildung läßt sich durch die Intensität der Laserlichtquelle Q, der Lage des Brennpunktes F, die mittels der Zerstreuungslinse L eingestellte Größe des Lichtflecks 13 bzw. 13' auf dem Dosenboden B und die Höhenlage des Reflektors R optimieren, wobei hierfür auch die Verstärkung des Kamerabildes, die Blendeneinstellung, die Belichtungszeit und dgl. eine Rolle spielen. Das bei Verstärkung des Kamerabildes zunehmende Rauschen wird durch die Speckle des Laserlichts überlagert. Die Speckle verwischen jedoch, wenn eine geringfügige Bewegung der Dose vorliegt. Um die Bildqualität durch Verwaschen der Speckle zu verbessern, kann es deshalb zweckmäßig sein, die Inspektion der Dose jeweils dann vorzunehmen, wenn sie sich ohnedies noch geringfügig bewegt. Als optimal für die Bildqualität erweist sich ein Lichtfleck, der mittig auf dem Dosenboden liegt und gleichmäßige Helligkeit besitzt, wobei der Durchmesser des Lichtfleckes durchaus kleiner als der Außendurchmesser des Dosenbodens sein kann. Ein Lichtfleck in einer Größe größer als der Außendurchmesser des Bodens beleuchtet auch die Innenwand der Dose. Dadurch kann wegen zunehmender Diffusion eine unerwünschte Abschwächung des Lichtes entstehen.

Es ist zweckmäßig, wenn die Laserlichtquelle minimal 30 mW Lichtleistung emittiert. Eine Steigerung wäre durch gepulsten Betrieb möglich.

Zur Inspektion der Dosen können diese von einem Fördermittel, z.B. Förderband, in einer einspurigen Reihe kontinuierlich mit hoher Geschwindigkeit unter dem Reflektor vorbeigeführt werden, wobei die Beleuchtung und Bildaufnahme dann erfolgt, wenn die Hochachse einer Dose im wesentlichen mit der optischen Achse der Kamera fluchtet. Durch eine Auswerteinrichtung erfolgt eine Bildanalyse, die bei Erkennen einer fehlerhaften Dose ein Signal liefert, um ggf. eine automatische Ausscheidung auszulösen.

Die vorhergehend erwähnte Engstelle 7 im Reflektor R muss nicht unbedingt entsprechend der zeichnerischen Darstellung als eine Bohrung oder Hohlraum ausgebildet sein, sondern kann bei Verwendung eines Reflektors aus transparentem Material durch eine Zone mit beispielsweise planparallelen, rechtwinklig zum Lichtstrahl ausgerichteten Ein- und Austrittsflächen gebildet werden. Anstelle eines kegelförmigen Reflektors R können auch andere geeignete optische Mittel, wie z.B. passend positionierte Lichtwellenleiter oder dergleichen verwendet werden.

Abweichend von dem vorhergehenden beschriebenen Ausführungsbeispiel kann die Position der Kamera mit der der Laserlichtquelle vertauscht werden, wenn ein geneigt angeordneter, ringscheibenförmiger Umlenkspiegel mit einer zentralen Bohrung für den Laserstrahl verwendet wird.

## Patentansprüche

1. Vorrichtung (V) zur optischen Inspektion offener Getränke-Dosen (D), die einen Boden (B) und einen eingezogenen Kragen (K), jeweils mit reflektierenden Eigenschaften, aufweisen, mit wenigstens einer außerhalb der Dose positionierten Lichtquelle (Q) zum Beleuchten des Doseninneren, einem zwischen der Lichtquelle und der Dosenöffnung angeordneten Reflektor (R) für Reflexionslicht aus dem Doseninneren, und einer mit einer Auswerteeinrichtung verbundenen, auf den Reflektor ausgerichteten Kamera (E), **dadurch gekennzeichnet, daß** eine optische Einrichtung (P) vorgesehen ist, mit der zur virtuellen Verlagerung der seitlich außerhalb eines zur Kamera (E) gerichteten Reflexions-Strahlengangs (18) des Reflektors (R) positionierten Lichtquelle (Q) auf den Dosenboden (B) Licht (11) aus der Lichtquelle (Q) durch einen oberhalb einer eine Engstelle (7) definierenden Öffnung des Reflektors (R) angeordneten Umlenkspiegel (S) zur Umlenkung des von der Lichtquelle kommenden Lichts in die Engstelle und im Strahlengang des Lichts nach der Engstelle (7) positionierte strahlformende Mittel (L) zur Strahlaufweitung durch die Dosenöffnung (4) von oben direkt auf den Dosenboden (B) projizierbar und der Kragen (K) innenseitig vom Dosenboden (B) her beleuchtbar ist, wobei der Umlenkspiegel (S) ein Abschattungselement für die Abbildung des Zentrumsbereichs des Lichtflecks (13,13') auf der Kamera bildet.

2. Vorrichtung nach Anspruch 1, **dadurch gekennzeichnet, daß** mit der optischen Einrichtung (P) auf dem Dosenboden (B) ein mittiger, annähernd kreisförmiger oder kreisringförmiger Lichtfleck (13, 13') erzeugbar ist, dessen Außendurchmesser vorzugsweise höchstens dem Außendurchmesser des Dosenbodens entspricht.

3. Vorrichtung nach Anspruch 2, **dadurch gekennzeichnet, daß** zwischen der Lichtquelle (Q) und der Engstelle (7) strahlformende Mittel (C, Z) zur Bündelung und/oder Anpassung des Strahlumrisses an die Umrißform des Dosenbodens (B) vorgesehen sind.

4. Vorrichtung nach Anspruch 1, **dadurch gekennzeichnet, daß** die Lichtquelle (Q) eine Laserlichtquelle (10), vorzugsweise ein Halbleiter-Laser, ist.

5. Vorrichtung nach Anspruch 4, **dadurch gekennzeichnet, daß** bei der Laserlichtquelle (10) eine Kollimatorlinse (C) und wenigstens eine Zylinderlinse (Z) vorgesehen sind, oder ein Kollimator mit Zylinderwirkung.

6. Vorrichtung nach Anspruch 4, **dadurch gekennzeichnet, daß** die Laserlichtquelle (10) seitlich außerhalb des zur Kamera (E) gerichteten Reflexions-Strahlengangs (18) des Reflektors (R) positioniert ist.

7. Vorrichtung nach Anspruch 1, **dadurch gekennzeichnet, daß** das strahlformende Mittel (L) wenigstens eine hinter der Engstelle (7), vorzugsweise innerhalb des Reflektors (R), positionierte Zerstreuungslinse ist.

8. Vorrichtung nach Anspruch 1, **dadurch gekennzeichnet, daß** der Umlenkspiegel (S) mit einer Halterung (8) oberhalb der Engstelle (7) am als Kegelreflektor ausgebildeten Reflektor (R) festgelegt ist.

9. Vorrichtung nach den Ansprüchen 7 und 8, **dadurch gekennzeichnet, daß** der Kegelreflektor der Dose (D) zugewandt durch ein Schutzglas (9) abgedeckt ist, und daß die Zerstreuungslinse (L) auf dem Schutzglas (9) angeordnet ist.

10. Verfahren zur optischen Inspektion oben offener Getränkedosen, bei dem das Doseninnere durch die Dosenöffnung mit Licht aus wenigstens einer Lichtquelle beleuchtet und aus dem Reflexionslicht über einen Reflektor eine Abbildung der Innenwand eines obenliegenden, eingezogenen Kragens gebildet wird, **gekennzeichnet durch** folgende Schritte:
a) das Licht wird gebündelt von der Seite eingestrahlt und **durch** eine lichtdurchlässige Engstelle (7) des Reflektors gespiegelt,
b) das die Engstelle (7) passierende Licht wird aufgeweitet und als die Lichtquelle in die Dose verlagernder Lichtfleck (13, 13') mittig direkt auf den Dosenboden (B) projiziert,
c) die Innenwand (3) des Kragens (K) wird aus dem Lichtfleck (13, 13') von unten beleuchtet,
d) von der Innenwand (3) des Kragens (K) nach außen oben reflektiertes Licht (15) wird vom vorzugsweise als Kegelreflektor ausgebildeten Reflektor (R) zu einer abbildenden Kamera (E) geleitet.

11. Verfahren nach Anspruch 10, **dadurch gekennzeichnet, daß** gebündeltes und geformtes Laserlicht optisch bis auf eine Lichtfleckgröße vorzugsweise höchstens entsprechend dem Außendurchmesser des Dosenbodens (B) aufgeweitet wird.

12. Verfahren nach Anspruch 11, **dadurch gekennzeichnet, daß** das Laserlicht im Strahlengang vor der Aufweitung fokussiert wird.

## Claims

1. Device (V) for optical inspection of open drinks cans (D) which have a base (B) and a drawn-in collar (K), each having reflective properties, having at least one light source (Q) positioned outside the can for illuminating the can interior, a reflector (R) arranged between the light source and the can opening for reflected light from the can interior, and a camera (E) connected to an evaluation device and directed towards the reflector, **characterised in that** an optical device (P) is provided with which for virtual displacement onto the can base (B) of the light source (Q) positioned laterally outside a reflection ray path (18) of the reflector (R) directed towards the camera (E), light (11) from the light source (Q) may be projected from directly above, through a deflection mirror (S) arranged above an opening of the reflector (R) defining a constriction (7) for deflecting the light coming from the light source into the constriction and beam-forming means (L) positioned in the ray path of the light after the constriction (7) for beam spreading through the can opening (4), onto the can base (B) and the collar (K) may be illuminated on the inside from the can base (B), whereby the deflection mirror (S) comprises a shading element for the imaging of the central region of the light patch (13, 13') in the camera.

2. Device according to Claim 1, **characterised in that** with the optical device (P) an approximately circular or annular light patch (13, 13') may be formed on the can base (B), the outer diameter of said patch preferably being no more than the outer diameter of the can base.

3. Device according to Claim 2, **characterised in that** between the light source (Q) and the constriction (7), beam-forming means (C, Z) for concentrating and/or adjusting the beam outline to the outline form of the can base (B) are provided.

4. Device according to Claim 1, **characterised in that** the light source (Q) is a laser light source (10), preferably a semiconductor laser.

5. Device according to Claim 4, **characterised in that** a collimator lens (C) and at least one cylindrical lens (Z) are provided for the laser light source (10), or a collimator with cylindrical effect.

6. Device according to Claim 4, **characterised in that** the laser light source (10) is positioned laterally outside the reflection ray path (18) of the reflector (R) directed towards the camera (E).

7. Device according to Claim 1, **characterised in that** the beam-forming means (L) is at least one diverging lens positioned behind the constriction (7), preferably within the reflector (R).

8. Device according to Claim 1, **characterised in that** the deflection mirror (S) is fixed with a holder (8) above the constriction (7) on the reflector (R) designed as a conical reflector.

9. Device according to Claims 7 and 8, **characterised in that** the conical reflector is covered on the side towards the can (D) by a protective glass sheet (9) and that the diverging lens (L) is arranged on the protective glass pane (9).

10. Method for optical inspection of drinks cans open at the top, whereby the can interior is illuminated through the can opening by light from at least one light source and from the reflected light an image of the inner wall of an upper drawn-in collar is formed via a reflector, **characterised in that** it has the following steps:
a) the light is shone in focused from the side and reflected through a constriction (7) of the reflector which allows light to pass,
b) the light passing through the constriction (7) is spread out and is projected centrally directly onto the can base (B) as the light patch (13, 13') displacing the light source into the can,
c) the inner wall (3) of the collar (K) is illuminated from below by the light patch (13, 13'),
d) light (15) reflected upwards from the inner wall (3) of the collar (K) is guided by the reflector (R) preferably designed as a conical reflector to an imaging camera (E).

11. Method according to Claim 10, **characterised in that** focused and formed laser light is optically spread to a light patch size preferably not larger than the outer diameter of the can base (B).

12. Method according to Claim 11, **characterised in that** the laser light is focused in the ray path before its spreading.

## Revendications

1. Dispositif (V) pour l'inspection optique de boîtes de boisson ouvertes (D), qui présentent un fond (B) et un col rentrant (K), chacun avec des propriétés réfléchissantes, avec au moins une source de lumière (Q) positionnée à l'extérieur de la boîte pour éclairer l'intérieur de la boîte, avec un réflecteur (R) disposé entre la source de lumière et l'ouverture de la boîte pour la lumière réfléchie hors de l'intérieur de la boîte, et avec une caméra (E) alignée sur le réflecteur (R), raccordée à un dispositif d'évaluation,
**caractérisé en ce qu'**
il est prévu un dispositif optique (P) avec lequel, pour le déplacement virtuel de la source de lumière (Q) positionnée latéralement à l'extérieur d'un faisceau (18) réfléchi par le réflecteur (R) en direction de la caméra (E), sur le fond de la boîte (B), une lumière (11) émanant de la source de lumière (Q) peut être projetée directement par le haut sur le fond de la boîte (B) à travers un miroir de déviation (S) disposé au-dessus d'une ouverture du réflecteur (R) définissant un goulot (7) et destiné à dévier la lumière émanant de la source de lumière dans le goulot et à travers des moyens de formation de rayon (L) positionnés dans le faisceau de la lumière après le goulot (7) et destinés à évaser le faisceau à travers l'ouverture (4) de la boîte et le col (K) peut être éclairé du côté intérieur à partir du fond de la boîte (B), dans lequel le miroir de déviation (S) forme un élément d'ombrage pour l'image de la zone centrale de la tache lumineuse (13, 13') sur la caméra.

2. Dispositif selon la revendication 1,
**caractérisé en ce que**
l'on peut, avec le dispositif optique (P), produire sur le fond de la boîte (B) une tache lumineuse centrale (13, 13') approximativement circulaire ou en couronne circulaire, dont le diamètre extérieur correspond de préférence au maximum du diamètre extérieur du fond de la boîte.

3. Dispositif selon la revendication 2,
**caractérisé en ce qu'**
il est prévu entre la source de lumière (Q) et le goulot (7) des moyens de formation de rayon (C, Z) destinés à focaliser et/ou à adapter le contour du rayon à la forme du contour du fond de la boîte (B).

4. Dispositif selon la revendication 1,
**caractérisé en ce que**
la source de lumière (Q) est une source de lumière laser (10), de préférence un laser à semi-conducteur.

5. Dispositif selon la revendication 4,
**caractérisé en ce qu'**
il est prévu près de la source de lumière laser (10) une lentille convergente (C) et au moins une lentille cylindrique (Z), ou un collimateur avec une action cylindrique.

6. Dispositif selon la revendication 4,
**caractérisé en ce que**
la source de lumière laser (10) est positionnée latéralement à l'extérieur du faisceau (18) réfléchi par le réflecteur (R) en direction de la caméra (E) .

7. Dispositif selon la revendication 1,
**caractérisé en ce que**
le moyen de formation de rayon (L) est au moins une lentille concave positionnée après le goulot (7), de préférence à l'intérieur du réflecteur (R).

8. Dispositif selon la revendication 1,
**caractérisé en ce que**
le miroir de déviation (S) est fixé par un support (8) au-dessus du goulot (7) sur le réflecteur (R) en forme de réflecteur conique.

9. Dispositif selon les revendications 7 et 8,
**caractérisé en ce que**
le réflecteur conique est couvert vers la boîte par un verre de protection (9) et **en ce que** la lentille concave (L) est disposée sur le verre de protection (9).

10. Procédé pour l'inspection optique de boîtes de boisson ouvertes vers le haut, dans lequel l'intérieur de la boîte est éclairé à travers l'ouverture de la boîte par une lumière émanant d'au moins une source de lumière et une image de la paroi intérieure d'un col supérieur rentrant est formée par la lumière réfléchie par un réflecteur,
**caractérisé en ce que**
a) la lumière est envoyée latéralement en un faisceau focalisé et est réfléchie à travers un goulot transparent (7) du réflecteur,
b) la lumière franchissant le goulot (7) est évasée puis est projetée directement au centre du fond de la boîte (B) en une tache lumineuse (13, 13') se déplaçant dans la boîte,
c) la paroi intérieure (3) du col (K) est éclairée par le bas à partir de la tache lumineuse (13, 13'),
d) la lumière (15) réfléchie vers le haut vers l'extérieur par la paroi intérieure (3) du col (K) est conduite à une caméra d'image (E) par le réflecteur (R) de préférence en forme de réflecteur conique.

11. Procédé selon la revendication 10,
**caractérisé en ce qu'**
une lumière laser focalisée et profilée est évasée optiquement jusqu'à une grandeur de tache lumineuse correspondant de préférence au maximum du diamètre extérieur du fond de la boîte (B).

12. Procédé selon la revendication 11,
**caractérisé en ce que**
la lumière laser est focalisée dans le faisceau avant son évasement.
